(19) Europäisches Patentamt
European Patent Office
Office européen des brevets

(11) **EP 1 300 079 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(51) Int Cl.:
***A21B 3/04*** *(2006.01)*

(21) Anmeldenummer: **02022196.6**

(22) Anmeldetag: **04.10.2002**

(54) **Gargerät mit Feuchtemesseinrichtung und Verfahren zur Feuchtemessung in einem Gargerät**

Cooking apparatus with device for measuring moisture and method for measuring moisture in a cooking apparatus

Appareil de cuisson avec un dispositif pour la mesure d'humidité et procédé pour la mesure d'humidité dans un appareil de cuisson

(84) Benannte Vertragsstaaten:
**AT BE BG CH CY CZ DE DK EE ES FI FR GB GR IE IT LI LU MC NL PT SE SK TR**

(30) Priorität: **06.10.2001 DE 10148709**

(43) Veröffentlichungstag der Anmeldung:
**09.04.2003 Patentblatt 2003/15**

(73) Patentinhaber: **MKN Maschinenfabrik Kurt Neubauer GmbH & Co.
38300 Wolfenbüttel (DE)**

(72) Erfinder:
• **Hauser, Günther, Prof. Dr.
38640 Goslar (DE)**
• **Helm, Peter
38300 Wolfenbüttel (DE)**

(74) Vertreter: **Einsel, Martin et al
Patentanwälte
Einsel & Kollegen
Jasperallee 1a
38102 Braunschweig (DE)**

(56) Entgegenhaltungen:
**DE-C- 906 023       US-A- 5 689 060**

**Beschreibung**

Die Erfindung betrifft ein Gargerät mit einem Garraum mit einer Garatmosphäre, mit einer Temperaturmesseinrichtung zur Bestimmung der Temperatur der Garatmosphäre, mit einer Einrichtung zur Erzeugung akustischer Wellen, mit einem Rohr, in dem die Einrichtung zur Erzeugung akustischer Wellen angeordnet ist, und mit einer Auswertungseinheit, wobei das Rohr und die Einrichtung zur Erzeugung akustischer Wellen Teil einer Einrichtung zur Bestimmung der Feuchte der Garatmosphäre in dem Garraum sind und wobei die Schallgeschwindigkeit in dem Garraum in der Auswertungseinheit zur Bestimmung der Feuchte herangezogen wird. Sie betrifft außerdem ein Verfahren zur Bestimmung der Feuchte in der Garatmosphäre in einem Garraum eines Gargerätes, bei dem die Temperatur der Garatmosphäre bestimmt wird, bei dem akustische Wellen in einem Rohr erzeugt werden und bei dem die Schallgeschwindigkeit in dem Garraum zur Bestimmung der Feuchte herangezogen wird.

Bei Umluftherden, Heißluftdämpfern, Heißluftgeräten, Mikrowellengeräten oder einer Kombination dieser und ähnlicher Geräte ist es für die Anwendung und die Qualität des Garvorganges vorteilhaft, wenn nicht nur die im Garraum befindliche Temperatur, sondern auch andere Größen bekannt sind. Verschiedentlich, beispielsweise in der EP 0 386 862 B1, ist schon vorgeschlagen worden, die Feuchtigkeit zu messen und gegebenenfalls außerdem nach einer Sollwertvorgabe zu regeln.

Hierzu sind unterschiedliche Methoden zur Bestimmung des Wasserdampfanteils einer Garatmosphäre eines Ofens vorgeschlagen worden. So wird nach einem Vorschlag in der DE 200 13 489 U1 die Stromaufnahme des Lüftermotors benutzt, um daraus auf den Wasserdampfgehalt im Garraum eines Umluftofens zu schließen. In der EP 0 517 433 B1 wird eine Einrichtung zur Messung der Dichte in einem Heizgerät mittels eines Gasfühlers beschrieben, der dann elektrische Signale erzeugen soll.

In der DE 41 41 768 A1 wird die Feuchte in einem Mikrowellenherd erfasst, indem elektromagnetische Strahlung insbesondere im sichtbaren oder im kurzwelligen Infrarotbereich eingesetzt wird, bei der dann die Absorptionsbanden des Wassermoleküls einen entsprechenden Effekt haben. Bei einem Vorschlag in der EP 0 701 388 B1 wird die Sauerstoffkonzentration gemessen, um Rückschlüsse auf die Feuchtigkeit zu ziehen. Als Messfühler wird dabei insbesondere eine Zirkoniumoxidzelle eingesetzt, deren eine Seite nach außen und deren andere Seite nach innen in den Kochraum gerichtet ist.

Die DE 42 06 845 C2 beschreibt ein weiteres Verfahren, das die Feuchtigkeit misst. Aufgrund thermodynamischer und praktischer Voraussetzungen kann mit diesem Verfahren die Feuchtigkeit, vor allem in den Extrembereichen, verhältnismäßig ungenau bestimmt werden. Des Weiteren ist eine aufwändige und zu wiederholende Kalibrierung erforderlich.

In der US-PS 5,689,060 wird als weitere Verbesserung vorgeschlagen, in einem Gargerät zur Bestimmung der Feuchte bei Mikrowellenherden im Bereich unter 100 °C die Schallgeschwindigkeit heranzuziehen. Dabei werden in zwei hohlen Messröhrchen Schallwellen erzeugt. Beide Röhrchen sind im Garraum angeordnet und besitzen Hüllen aus thermisch gut leitfähigem Material. Eines der Röhrchen ist luftdicht abgeschlossen, das andere steht mit der Atmosphäre im Garraum in Verbindung und weist daher in etwa die gleiche Luftfeuchtigkeit wie diese auf. Aus der Phasendifferenz der Schallwellen kann dann ein Rückschluss auf die Feuchtigkeit in dem Garraum gezogen werden. Diese Messmethode berücksichtigt, dass unterhalb von 100 °C Sättigungsgrenzen für den Wasserdampf nicht überschritten werden können, sodass nur geringe und etwa lineare Veränderungen der Schallgeschwindigkeit auftreten können, die sich in einer Verschiebung von einigen bis maximal etwa 40 bis 50° des Phasenwinkels einer Schallwelle auswirken können. Für höhere Temperaturen und andere als Mikrowellenherde ist diese Anordnung nicht geeignet.

Allen Konzeptionen ist gemeinsam, dass recht aufwändige und/oder anfällige Einrichtungen eingesetzt werden müssen. Dies ist insbesondere deshalb von Nachteil, weil die Geräte nicht von technischen Experten im Labor benutzt werden sollen, die mit der Wartung, Pflege und gegebenenfalls Reparatur oder überhaupt Fehlererkennung vertraut sind, sondern durchaus auch von technischen Laien, die diese Gargeräte einfach für ihren eigentlichen Bestimmungszweck, nämlich das Zubereiten von Speisen, benutzen möchten, und zwar ohne Wartung über mehrere Jahre hinweg. Damit ist bereits der Einsatz von Messeinrichtungen kritisch, die bei Verschmutzungen funktionsunfähig werden oder zu Fehlern neigen.

Dabei ist zu berücksichtigen, dass relativ hohe Temperaturen von ca. 100 °C bis 300 °C sowie durch die Garvorgänge auch starke Verunreinigungen und Verschmutzungen der Garräume auftreten können. Auch wenn Benutzer diese sicher im Regelfall reinigen, wäre eine Funktionsstörung bei Restschmutz ein erhebliches Problem.

Aufgabe der Erfindung ist es, ein praxisgerechtes Messverfahren und entsprechendes Gargerät vorzuschlagen, um den Wasserdampfgehalt beziehungsweise die -Feuchte einer Garatmosphäre festzustellen.

Diese Aufgabe wird bei einem gattungsgemäßen Gargerät dadurch gelöst, dass in dem Rohr durch Resonanzanregung akustische stehende Wellen erzeugt werden, dass eine Vorrichtung vorgesehen ist, die die Frequenz der von der Einrichtung zur Erzeugung akustischer Wellen erzeugter Wellen so einstellt, dass akustische stehende Wellen entstehen, und dass die von der Vorrichtung eingestellte Frequenz und die Daten der Temperaturmesseinrichtung der Auswertungseinheit zugeführt werden und daraus die Feuchte ermittelt wird. Bei einem Verfahren wird die Aufgabe dadurch gelöst, dass in dem Rohr durch Resonanzanregung akustische stehende Wellen erzeugt werden, dass die Frequenz der erzeugten akustischen Wellen so eingestellt wird, dass die Maxima der stehenden Wellen aufrecht erhalten bleiben und dass die dabei eingestellte Frequenz und die Temperatur ausgewertet und daraus die Feuchte ermittelt wird.

Mittels weiterer bevorzugt vorzusehender Einrichtungen, mit denen Dampf erhöht beziehungsweise reduziert wird, kann ein Regelkreis aufgebaut werden, um den Wasserdampfgehalt im Garraum nach einer Sollwertvorgabe zu regeln.

Dieses erfindungsgemäße Verfahren macht sich ebenso wie das in der US-PS 5,689,060 vorgeschlagene einen physikalischen Effekt zu Nutze, nämlich die Dichteunterschiede zwischen trockener Luft und einer reinen Wasserdampfatmosphäre (ca. 1,2 kg/m3 zu 0,88 kg/m3), arbeitet allerdings auf einem ganz anderen Weg.

Die Schallgeschwindigkeit eines Mediums ist von dessen Dichte abhängig. Man kann also umgekehrt mit einer Schallgeschwindigkeitsmessung die Dichte eines Gases oder eines Gasgemisches bestimmen. Mittels einer Schallgeschwindigkeitsmessung kann man also die Dichte der Garatmosphäre während des Garvorganges feststellen und daraus den Anteil an Wasserdampf und damit die Feuchte der Garatmosphäre bestimmen. Bei dieser Anwendung wird berücksichtigt, dass die unterschiedliche Gartemperatur (typischerweise zwischen 100 °C und 300 °C) ebenfalls die Dichte der Garatmosphäre verändert. Daher wird auch die ohnehin in jedem Gargerät vorhandene Temperaturmessung bei der Vorgehensweise mit eingesetzt, was dementsprechend auch nicht zu zusätzlichem apparativen Aufwand führt.

Die Bestimmung der Schallgeschwindigkeit erfolgt nun erfindungsgemäß nicht wie in der US-PS 5,689,060 durch einen Vergleich der Phasendifferenz zweier Schallwellen in unterschiedlichen Medien oder etwa durch Laufzeitmessungen, sondern durch die Erzeugung einer stehenden Welle in einem Rohr.

Im Prinzip wird dabei in einem Rohr, mit Hilfe eines elektrostatischen Lautsprechers, eine stehende Longitudinalwelle mit Hilfe einer Regelung in Form einer Nachführung oder einer selbsttätigen Rückkopplung stets in ihrer Resonanzfrequenz aufrecht erhalten.

Dabei werden an den Knotenpunkten der Schwingung der stehenden Wellen Bohrungen angebracht, die einen Austausch mit der Umgebungsluft innerhalb des Gargerätes ermöglichen. Durch die Einwirkung von Temperatur und Feuchtigkeit verändert sich entsprechend die Schallgeschwindigkeit innerhalb des Rohres. Da die Resonanzfrequenz mit der Wellenlänge zusammenhängt und die Wellenlänge durch die Länge des Rohres fest vorgegeben und damit konstant ist, wird sich bei einer Änderung von Feuchte und/oder Temperatur entsprechend die Resonanzfrequenz ändern.

Der beispielsweise elektrostatische Lautsprecher oder die sonstige Einrichtung zur Erzeugung akustischer Wellen befindet sich etwa an einem Ende des Rohres und regt die Gassäule in dem Rohr zu Resonanzschwingungen an. Dabei entstehen stehende Longitudinalwellen in einem ganzzahligen Vielfachen von $\lambda/4$ beziehungsweise von $\lambda/2$. Das verwendete Rohr ist entweder auf beiden Seiten geschlossen, so dass sich eine Resonanzfrequenz von n x $\lambda/2$ ergibt oder es ist einseitig offen und schwingt dann mit einer Resonanzfrequenz von (2n-1) x $\lambda/4$. Die Eigenfrequenz f und die geometrische Wellenlänge sind über die Beziehung c = $\lambda$ x f mit der Schallgeschwindigkeit c verbunden.

Die Temperatur wird wie erwähnt vorteilhafterweise mit einer ohnehin vorhandenen Temperaturmessung oder auch mit einer speziellen Temperaturmesseinrichtung festgestellt und bei der Ermittlung der Feuchte zusätzlich benutzt.

Die Verwendung stehender Wellen bei der Ermittlung von Feuchtigkeitsgehalten ist auf ganz anderen technischen Gebieten, beispielsweise zur Bestimmung der Feuchte in Kernreaktoren aus der CH-PS 398 123 oder für technische Anlagen aus der DE-PS 906 023 bekannt. Aus der DE 198 09 662 A1 ist ein solcher Sensor für die Bestimmung der Konzentration von Flüssigkeiten in Aerosolen bekannt. Alle diese Vorschläge beziehen sich allerdings auf sehr komplizierte und kostspielige Einrichtungen, die solche physikalischen Effekte ausnutzen, die aber als solche in Gargeräten nicht einsetzbar sind, in denen es vor allem auf zuverlässige, kostengünstige und auch wartungsarme Bedienung durch Nichtfachleute ankommt.

Zur Erläuterung des Effektes sei hier kurz auf die physikalischen Zusammenhänge eingegangen. Allgemein gilt:

$$c = \sqrt{\frac{\chi * p}{\delta}} \quad \left[\frac{m}{s}\right]$$

Dabei ist c die Schallgeschwindigkeit (in m/s), p ist der Luftdruck (in Pa) und $\delta$ die Dichte (in kg/m$^3$). $\chi$ ist der materialabhängige Adiabatenexponent $C_p/C_v$ und nimmt bei Luft in der typischen Zusammensetzung aus $N_2$, $O_2$ und Ar den Wert 1,4 annimmt.

Mit der allgemeinen Beziehung $\delta$ = p/RT, wobei R die Gaskonstante und T die Temperatur darstellt, kann man Gleichung I umformen zu:

$$c = \sqrt{\chi * R * T} \quad \left[\frac{m}{s}\right]$$

Diese Gleichung II lässt sich auflösen nach:

$$R_{\text{Atmosphäre}} = \frac{c^2}{\chi * T} \quad \left[\frac{J}{kg * K}\right]$$

Die Temperatur T der Garatmosphäre ist bei Gargeräten ohnehin eine der wichtigsten Daten und wird stets gemessen. Auf sie kann daher problemlos zurückgegriffen werden.

Die mittlere Gaskonstante eines Gasgemisches aus zwei Gasen, hier also aus Luft und aus Wasserdampf, ist definiert durch:

$$R_{\text{atmosphäre}} = \frac{R_{\text{trockeneLuft}} * m_{\text{trockeneluft}} + R_{\text{wasserdampf}} * m_{\text{wasserdampf}}}{m_{\text{trockeneluft}} + m_{\text{wasserdampf}}}$$

Diese Gleichung kann man umformen zu:

$$\frac{m_{\text{Wasserdampf}}}{m_{\text{Luft}}} = \frac{1 - \dfrac{R_{\text{trockeneLuft}}}{R_{\text{atmosphäre}}}}{\dfrac{R_{\text{Wasserdampf}}}{R_{\text{atmosphäre}}} - 1}$$

Die linke Seite der Gleichung entspricht dem gesuchten Massenverhältnis Wasserdampf zu trockener Luft, das zugleich eine Angabe für die Feuchte oder Feuchtigkeit der Luft darstellt. Die Parameter $R_{\text{trockene Luft}}$ und $R_{\text{Wasserdampf}}$ sind bekannt und $R_{\text{Atmosphäre}}$ erhält man aus der Messung der Schallgeschwindigkeit c und einsetzen in Gleichung III.

Bei der Betrachtung wird zunächst zum leichteren Verständnis von einem konstanten Wert $\chi$ ausgegangen. Der Wert ist aber von der Gasart (Atomanzahl des Moleküls) abhängig und liegt bei Wasserdampf bei 1,33. Bei der realen Garatmosphäre mit einer Mischung aus trockener Luft und Wasserdampf wird folglich $\chi$ abhängig vom Wasserdampfgehalt zwischen 1,33 und 1,4 variieren. Dieser geringfügige Fehler in den Randwerten kann näherungsweise akzeptiert werden.

In einer bevorzugten Ausführungsform der Erfindung wird auch diese Randbedingung noch berücksichtigt. Dies geschieht dadurch, dass durch ein Iterationsverfahren $\chi$ genauer bestimmt wird. Dabei wird der Feuchtegehalt mit einer Annahme von $\chi$ berechnet und aufgrund des Ergebnisses ein neues $\chi$ berechnet (lineare Interpolation zwischen 1,33 und 1,4 je nach berechnetem Wasserdampfgehalt). Wenn sich der berechnete Wert von $\chi$ nicht mehr ändert (Genauigkeitsgrenzwert ), wird die Iteration beendet.

Ein wesentlicher Vorteil der Erfindung liegt darin, dass die Schallgeschwindigkeit relativ einfach und genau bestimmt werden kann, und zwar ohne anfällige oder komplizierte Messinstrumente, ohne Wartung und auch über eine sehr lange Benutzungszeit hinweg.

Anders als bei der US-PS 5,689,060 entsteht noch ein weiterer Vorteil: Dort wird eine akustische Welle mit einer Frequenz um etwa 4 kHz eingesetzt, so dass die Feuchtebestimmung mit einer im Hörbereich des menschlichen Benutzers liegenden und damit störenden Geräuschentwicklung einhergeht. In einer bevorzugten Ausführungsform der Erfindung werden aber die Abmessungen des Rohres und die von der Einrichtung zur Erzeugung akustischer Wellen erzeugten Wellen so aufeinander abgestimmt sind, dass eine stehende Welle in einem Obermodus, insbesondere im 3. oder 4. Obermodus entsteht. Dies erlaubt es, die Frequenzen in den Bereich oberhalb von etwa 20 kHz zu verschieben, also aus dem menschlichen Hörbereich heraus.

Hierzu wird beispielsweise eine Ausführungsform der Erfindung eingesetzt, bei der eine Vorrichtung zur Rückkopplung vorgesehen ist. Durch ein Hochpassfilter können jetzt alle störenden Geräusche heraus gefiltert werden, die etwa durch die Bewegung des Lüfterrades etc. entstehen und die Rückkopplung störend beeinflussen können. Durch ein Bandpassfilter, das aus den rückgekoppelten Frequenzen nur gewünschte Frequenzbereiche, insbesondere außerhalb des menschlichen Hörbereiches, zulässt, können zusätzlich ungewünschte Obertöne weg gefiltert werden. Besonders geeignet ist ein sogenanntes Mitlauffilter, auch Tracking Filter genannt, das um eine Frequenz herum im Filter aufspannt und bei variabler Mittelfrequenz "mitläuft", also den Frequenzbereich jeweils aktuell anpasst.

Bei einer weiteren Ausführungsform der Erfindung weist eine Vorrichtung ein Filter auf, das aus den nachgeführten Frequenzen nur gewünschte Frequenzbereiche, insbesondere außerhalb des menschlichen Hörbereiches, zulässt. Es wird dadurch gewissermaßen ein Fenster für solche Frequenzen aufgespannt, in denen sich die Frequenzen der stehenden Welle befinden, die stehende Wellen erzeugen, die nicht mit hörbaren Schwingungen verbunden sind. Auch hier werden ungewünschte Fremdgeräusche ferngehalten.

Vorzugsweise wird an der Position eines Schwingungsknotens der stehenden Wellen im Rohr mindestens eine Bohrung in der Rohrwandung angeordnet. Besonders bevorzugt ist es dabei zur Erzwingung der obengenannten Obermoden mindestens an der Position von zwei Schwingungsknoten der stehenden Wellen im Rohr mindestens je eine Bohrung in der Rohrwandung anzuordnen.

Das erfindungsgemäße Gargerät kann die Feuchte auch bei relativ hohen Temperaturen von 300 °C bestimmen, wie sie in Heißluftherden und Kombidämpfern auftreten, und bei Garprozessen entsprechend bei der Regelung berücksichtigen. Bei Tests hat sich gezeigt, dass die Feuchte auf genauer als 1 % Abweichung bestimmt werden kann, während bei herkömmlichen Verfahren 30 % Abweichung vorkommen können.

Das bedeutet, dass die Bestimmung der Feuchte nicht nur benutzt werden kann, tendenziell durch Zugabe oder Beendigung der Zugabe die Wasserzufuhr in die Garatmosphäre zu beeinflussen, um die Feuchte einzustellen. Es kann sogar hochgenau in den Ablauf und die Steuerung der Garprozesse eingegriffen werden, um vollautomatische Vorgänge ablaufen zu lassen, beispielsweise neu aus variablen Produkten mit unterschiedlichen Feuchtegehalten (Gemüse verschiedener Herkunft) vorgegebene Speisen optimal zu garen.

Im Folgenden werden anhand der Zeichnung einige Ausführungsbeispiele der Erfindung näher erläutert. Es zeigen:

**Figur 1**     eine schematische Darstellung eines erfindungsgemäßen Gerätes;

**Figur 2**     eine schematische Darstellung einer Ausführungsform einer Einrichtung zur Bestimmung der Feuchte für ein erfindungsgemäßes Gargerät;

**Figur 3**     eine schematische Darstellung einer anderen Ausführungsform einer Einrichtung zur Bestimmung der Feuchte für ein erfindungsgemäßes Gargerät; und

**Figur 4**     eine schematische Darstellung einer Ausführungsform für eine Vergleichsmessung zur Unterstützung der Einrichtung zur Bestimmung der Feuchte.

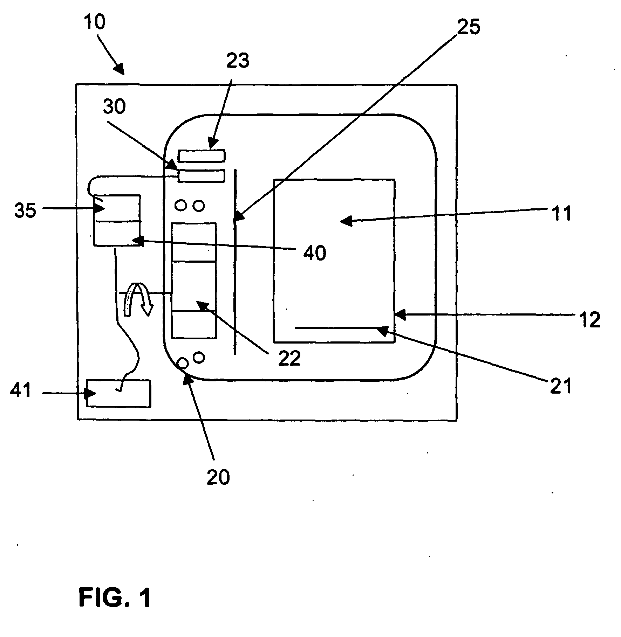

Einen schematischen Aufbau eines Ausführungsbeispiels eines erfindungsgemäßen Gargerätes zeigt **Figur 1.** Ein Gehäuse 10 enthält einen Garraum 11, der mit einer Garatmosphäre während des Garvorganges angefüllt ist. Diese Garatmosphäre besteht in erster Linie aus den für Luft typischen und im Verhältnis zueinander im wesentlichen konstanten Anteilen an Stickstoff ($N_2$), Sauerstoff ($O_2$) und Argon (Ar) und einem schwankenden, vom Garvorgang und dem Gargut beeinflussten und hier besonders interessierenden Anteil an Wasserdampf ($H_2O$).

Der Garraum ist von außen durch einen Türbereich 12 zugänglich, der auch ein Fenster aufweisen kann, das für den Benutzer eine optische Verfolgung des Fortschrittes des Garvorganges ermöglicht.

Er ist mit den für den Garvorgang und die Behandlung und Handhabung des Gargutes erforderlichen beziehungsweise sinnvollen Elementen ausgerüstet, die hier nur teilweise und schematisch angedeutet sind. Dazu gehören zum Beispiel Heizkörper 20, ein Gargutträgerblech 21, ein Lüfterrad 22, eine Temperaturmesseinrichtung 23 und unter anderem auch ein Luftleitblech 25.

Außerdem ist auch eine Einrichtung zur Bestimmung der Feuchte beziehungsweise eine Feuchtemesseinrichtung 30 vorgesehen.

Das Ergebnis der Feuchtemesseinrichtung 30 wird an eine nachgeschaltete Elektronik beziehungsweise Auswertungseinheit 40 übermittelt und von dort ein Steuersignal an eine Gerätesteuerung 41 weitergegeben. Auch die Temperaturmesseinrichtung 23 ist mit der nachgeschalteten Elektronik beziehungsweise Auswertungseinheit 40 verbunden.

In der Auswertungseinheit 40 werden die Messwerte, also die Temperatur T und die von der Feuchtemesseinrichtung 30 festgestellten Größen verknüpft mit den bekannten festen Größen wie beispielsweise den oben bereits erörterten Materialkonstanten.

Das Ergebnis kann dann als Ansteuerung der Gerätesteuerung dienen. Durch Vergleich mit der Sollwertgröße wird ein entsprechender Aktor betätigt, um über einen Ist-/Soll-Vergleich nach der Sollwertvorgabe zu regeln.

Es ist im Grunde nicht wesentlich für die Erfindung, wo die Elektronik 40 angeordnet ist, ob es sich um ein einteiliges Bauteil handelt oder ob die einzelnen Berechnungen der Schallgeschwindigkeit beziehungsweise Feuchte in unterschiedlichen Bereichen erfolgen. Beispielsweise kann die Elektronik 40 auch ein Teil der Sensor- oder der Geräteelektronik sein und die Berechnung bereits dort stattfinden, ohne dass noch separate Leitungen verlegt werden müssen.

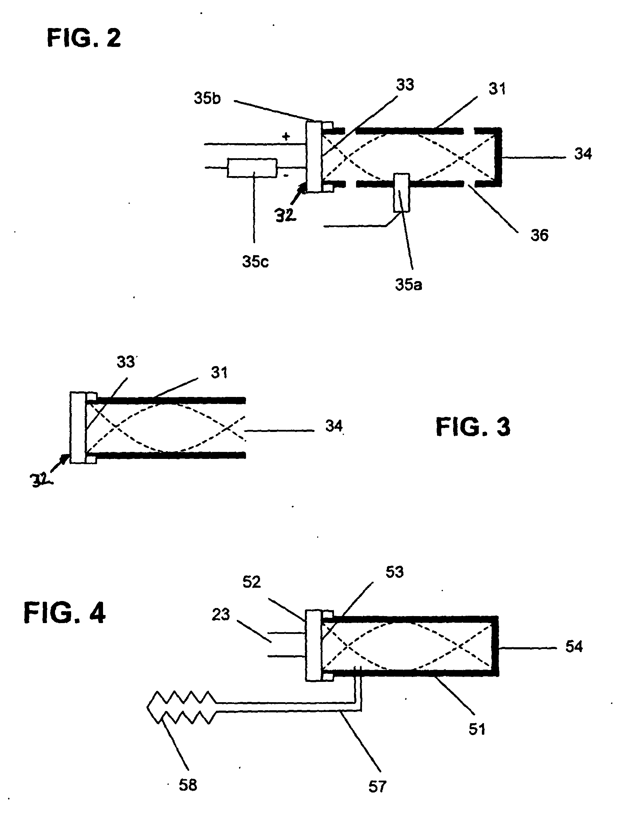

In **Figur 2** ist eine schematische Darstellung einer Ausführungsform einer Einrichtung zur Bestimmung der Feuchte für ein erfindungsgemäßes Gargerät in vergrößerter Wiedergabe zu erkennen. Die Einrichtung 30 weist ein Rohr 31 auf. Das Rohr 31 ist insbesondere mit einer Einrichtung 32 zur Erzeugung akustischer Wellen ausgerüstet.

Das Rohr 31 ist etwa zylindrisch aufgebaut und besitzt eine etwa zylindrische Rohrwandung. An den beiden einander gegenüberliegenden Enden 33 und 34 ist in dieser Ausführungsform das Rohr jeweils geschlossen. Die Einrichtung 32 zur Erzeugung der akustischen Wellen befindet sich benachbart des einen Endes 33. Insbesondere kann die Membran 35 b der Einrichtung 32 zum Erzeugen akustischer Wellen vollflächig hier das Rohr 31 an diesem Ende 33 abschließen. In diesem Falle würde die Membran 35 b das geschlossene Ende 33 im mechanischen Sinne bilden.

Um einen definierten Austausch mit dem zu untersuchenden Gas, also der Garraumatmosphäre im Garraum 11, zu erzielen, sind Bohrungen 36 vorgesehen. Diese Bohrungen 36 sind an der Position eines oder mehrerer Schwingungsknoten der stehenden Welle angeordnet.

Diese Ausführungsform ist insbesondere für eine stark turbulente Garraumatmosphäre vorgesehen, da nur durch die Bohrungen ein Austausch mit der Garraumatmosphäre erfolgt. Die Anzahl, Größe und Lage der Bohrungen kann von der Stärke der Umgebungsturbulenz abhängig gemacht werden.

Der Durchmesser des Rohres 31 sollte geringer sein als die halbe Wellenlänge einer stehenden Welle. Dadurch wird vermieden, dass im Rohr Querschwingungen entstehen. Nur Longitudinalwellen in Längsrichtung können sich in diesem Falle ausbilden.

Die Länge des Rohres kann exakt die Hälfte der Wellenlänge, also $\lambda/2$, betragen. Auf diese Weise schwingt die Atmosphäre im Rohr 31 mit der Grundfrequenz. Bei der Grundfrequenz ist die Anregung der Resonanz am einfachsten. Bevorzugt ist allerdings eine Schwingung bei höheren Moden, etwa im dritten oder vierten Obermodus. Dies verschiebt die Frequenz in einen Bereich oberhalb von 20 kHz, also aus dem menschlichen Hörbereich heraus. Noch höhere Moden sind möglich, bieten aber keine weiteren Vorteile.

Für die Erzeugung und Aufrechterhaltung der stehenden Wellen beziehungsweise der Resonanzschwingung bieten sich insbesondere drei unterschiedliche Möglichkeiten an, die jeweils in der Figur 2 angedeutet sind. Es ist jeweils eine Vorrichtung 35 vorgesehen, die die Frequenz der von der Einrichtung 32 zur Erzeugung akustischer Wellen erzeugten Wellen so einstellt, dass akustische stehende Wellen entstehen.

In einer ersten Variante geschieht dies durch Rückkopplung. So kann ein Wechseldruckempfänger 35a, beispielsweise ein Kondensatormikrophon, in dem Rohr angeordnet werden. Die Anordnung des Kondensatormikrophons erfolgt in einer Position, die in der stehenden Welle einem Schwingungsbauch entspricht. Dieser Wechseldruckempfänger 35a kann jetzt mittels Rückkopplung zur Aufrechterhaltung der Resonanzschwingung herangezogen werden.

In einer anderen Alternative kann eine Regelung vorgesehen werden, die ständig die Frequenz nachführt, damit die maximal mögliche Schwingungsamplitude erhalten bleibt. Hierfür kann der Hub einer Membran 35b der Einrichtung 32 zur Erzeugung und Aufrechterhaltung der stehenden Wellen, also des elektrostatischen Lautsprechers, verwendet werden. Dieser Hub sollte bei dieser Nachführung möglichst groß bleiben.

Eine dritte Alternative arbeitet mit der Messung des Speisestromes der Einrichtung 32 zur Erzeugung akustischer Wellen. Die in die Einrichtung 32 zur Erzeugung akustischer Wellen eingespeiste Frequenz wird von einem spannungsgesteuerten Oszillator, meist als VCO (Voltage Controlled Oscillator) bezeichnet, erzeugt. Wenn die ansteigende Frequenz in den Resonanzbereich des Rohres 31 gelangt, verringert sich entsprechend der Speisestrom erheblich, je nach Eigendämpfung des Systems. Bei eingetretener Resonanz hat der Speisestrom der Einrichtung 32 zur Erzeugung akustischer Wellen den niedrigsten Wert.

Wenn sich durch Temperatur- und Feuchteänderungen das Schwingungssystem verstimmt, reduziert sich dadurch die Amplitude der stehenden Welle, also der Gassäulenschwingung in dem Rohr 31. Damit aber erhöht sich gleichzeitig die Stromaufnahme der Einrichtung 32 zur Erzeugung akustischer Wellen.

Dieser steigende Spannungsabfall kann an einem Vorwiderstand 35c im Speisestromkreis der Einrichtung 32 zur Erzeugung akustischer Wellen beobachtet und benutzt werden, um den spannungsgesteuerten Oszillator nachzusteuern. Diese Nachsteuerung erfolgt, bis der Strom beziehungsweise der Spannungsabfall an dem Vorwiderstand 35c wiederum sein Minimum erreicht hat. Als Folge dieser Regelung ändert sich dabei die Frequenz, die wie erörtert zur Bestimmung von Feuchte und Temperatur herangezogen wird.

In der **Figur 3** wird eine alternative Ausführung eines Rohres 31 dargestellt. Diese alternative Ausführung ist für eine turbulenzarme Umgebung geeignet und kann beispielsweise in einem Bereich angeordnet werden, der mit der Garraumatmosphäre zwar noch in Verbindung steht, gegenüber dieser jedoch strömungsmäßig abgeschattet ist. Hier ist das Rohr 31 zwar an einem Ende 33 geschlossen, an dem anderen Ende 34 jedoch offen. Die Länge des Rohres beträgt in diesem Falle ein ganzzahliges Vielfaches von (2n-1) x /4. Das offene Ende 34 des Rohres kann hier unmittelbar eingesetzt werden, um den Austausch mit der Garraumatmosphäre durch Diffusion zu ermöglichen. Es kann also auf Bohrungen 36 gegebenenfalls verzichtet werden, wenn nur die Grundschwingung verwendet werden soll.

Im Übrigen sind die Merkmale dieser Ausführungsform ähnlich denen in Figur 2.

**Figur 4** zeigt schließlich eine weitere Möglichkeit, die in Kombination mit einem der beiden Rohre 31 aus den Figuren 2 oder 3 eingesetzt werden kann. Figur 4 zeigt ein weiteres, im Übrigen sehr ähnlich ausgebildetes Rohr 51, das mit einer Einrichtung 52 zur Erzeugung akustischer Wellen ausgestattet und an beiden Enden 53, 54 geschlossen ist und keine Bohrungen zum Gasaustausch mit der Umgebung besitzt. Dieses Rohr 51 wird mit trockener Luft gefüllt, besitzt also konstante Feuchte. Zur Vermeidung einer Druckerhöhung im Inneren wird er über ein Kapillarröhrchen 57 mit einem Ausgleichsbehälter 58, vorzugsweise einem nachgiebigen Gummiball, verbunden.

Wird nun die gleiche Messung wie beispielsweise in dem Rohr 31 in Figur 2 vorgenommen, so wird hier die Temperatur als frequenzabhängige Größe gemessen. Sind die Temperaturen in den beiden Rohren 31, 51 identisch, so kann direkt der Wert der Resonanzfrequenz in dem zweiten Rohr 51 in Bezug zur Resonanzfrequenz in dem ersten Rohr 31 gesetzt und daraus auf die Feuchte geschlossen werden.

Eine alternative, nicht dargestellte Möglichkeit besteht darin, die Temperaturmesseinrichtung 23 einschließlich der Einrichtung 32 zur Erzeugung akustischer Wellen vollkommen gasdicht abzuschließen, sodass keine Zerstörung der Lautsprechermembran 35b als Folge einer temperaturbedingten Druckerhöhung auftreten kann.

**Bezugszeichenliste**

| | |
|---|---|
| 10 | Gehäuse |
| 11 | Garraum |
| 12 | Türbereich |

| | |
|---|---|
| 20 | Heizkörper |
| 21 | Gargutträgerblech |
| 22 | Lüfterrad |
| 23 | Temperaturmesseinrichtung |
| 25 | Luftleitblech |

| | |
|---|---|
| 30 | Einrichtung zur Bestimmung der Feuchte beziehungsweise Feuchtemesseinrichtung |
| 31 | Rohr |
| 32 | Einrichtung zur Erzeugung akustischer Wellen |
| 33 | Ende des Rohres |
| 34 | Ende des Rohres |
| 35 | Vorrichtung zur Einstellung der Frequenz |
| 35a | Wechseldruckempfänger |
| 35b | Membran |
| 35c | Vorwiderstand |
| 36 | Bohrungen |

| | |
|---|---|
| 40 | Auswertungseinheit beziehungsweise elektronische Schaltung |
| 41 | Gerätesteuerung |

| | |
|---|---|
| 51 | Rohr |
| 52 | Einrichtung zur Erzeugung akustischer Wellen |
| 53 | Ende des Rohres |
| 54 | Ende des Rohres |
| 57 | Kapillarröhrchen |
| 58 | Ausgleichsbehälter |

**Patentansprüche**

1. Gargerät

   - mit einem Garraum (11) mit einer Garatmosphäre,
   - mit einer Temperaturmesseinrichtung (23) zur Bestimmung der Temperatur der Garatmosphäre,
   - mit einer Einrichtung (32) zur Erzeugung akustischer Wellen,
   - mit einem Rohr (31), in dem die Einrichtung (32) zur Erzeugung akustischer Wellen angeordnet ist, und
   - mit einer Auswertungseinheit (40),
   - wobei das Rohr (31) und die Einrichtung (32) zur Erzeugung akustischer Wellen Teil einer Einrichtung (30) zur Bestimmung der Feuchte der Garatmosphäre in dem Garraum (11) sind und wobei die Schallgeschwindigkeit in dem Garraum (11) in der Auswertungseinheit (40) zur Bestimmung der Feuchte herangezogen wird,

   **dadurch gekennzeichnet,**
   **dass** in dem Rohr (31) durch Resonanzanregung akustische stehende Wellen erzeugt werden,
   **dass** eine Vorrichtung (35) vorgesehen ist, die die Frequenz der von der Einrichtung (32) zur Erzeugung akustischer Wellen erzeugten Wellen so einstellt, dass akustische stehende Wellen entstehen, und
   **dass** die von der Vorrichtung (35) eingestellte Frequenz und die Daten der Temperaturmesseinrichtung (23) der Auswertungseinheit (40) zugeführt werden und daraus die Feuchte ermittelt wird.

2. Gargerät nach Anspruch 1,
   **dadurch gekennzeichnet,**
   **dass** die Vorrichtung (35) eine Rückkopplungsvorrichtung ist, die die Einstellung der Frequenz der von der Einrichtung (32) zur Erzeugung akustischer Wellen erzeugten Wellen durch Rückkopplung vornimmt.

3. Gargerät nach Anspruch 2
   **dadurch gekennzeichnet,**
   **dass** die Vorrichtung (35) einen Wechseldruckempfänger aufweist, der im Rohr (31) an der Position eines Schwingungsbauches der stehenden Wellen angeordnet ist, und
   **dass** der Wechseldruckempfänger eine Rückkopplung auf die Einrichtung zur Erzeugung der akustischen Welle (32) abgibt.

4. Gargerät nach Anspruch 2 oder 3,
   **dadurch gekennzeichnet,**
   **dass** die Vorrichtung (35) ein Hochpassfilter oder ein Bandpassfilter oder einen Mitlauffilter aufweist, das aus den rückgekoppelten Frequenzen nur gewünschte Frequenzbereiche, insbesondere außerhalb und oberhalb des menschlichen Hörbereiches, zulässt.

5. Gargerät nach einem der vorstehenden Ansprüche,
   **dadurch gekennzeichnet,**
   **dass** an der Position eines Schwingungsknotens der stehenden Wellen im Rohr (31) mindestens eine Bohrung (36) in der Rohrwandung angeordnet ist.

6. Gargerät nach Anspruch 5,
   **dadurch gekennzeichnet,**
   **dass** mindestens an der Position von zwei Schwingungsknoten der stehenden Wellen im Rohr (31) mindestens je eine Bohrung (36) in der Rohrwandung angeordnet ist.

7. Gargerät nach Anspruch 5 oder 6,
   **dadurch gekennzeichnet,**
   **dass** die Bohrungen (36) als Schlitze ausgebildet sind.

8. Gargerät nach Anspruch 7,
   **dadurch gekennzeichnet,**
   **dass** die Bohrung (36) als das Rohr (31) in mehrere Rohrelemente trennender Schlitz ausgebildet ist.

9. Gargerät nach Anspruch 5 oder 6,
   **dadurch gekennzeichnet,**

**dass** die Bohrungen einen kreisförmigen Querschnitt besitzen.

10. Gargerät nach einem der vorstehenden Ansprüche,
    **dadurch gekennzeichnet,**
    **dass** die Vorrichtung (35) eine Nachführvorrichtung ist, die die Einstellung der Frequenz der von der Einrichtung (32) zur Erzeugung akustischer Wellen erzeugten Wellen in Abhängigkeit von veränderlichen Messwerten vornimmt.

11. Gargerät nach Anspruch 10,
    **dadurch gekennzeichnet,**
    **dass** die Vorrichtung (35) ein Filter aufweist, das aus den nachgeführten Frequenzen nur gewünschte Frequenzbereiche, insbesondere außerhalb und oberhalb des menschlichen Hörbereiches, zulässt.

12. Gargerät nach Anspruch 10 oder 11,
    **dadurch gekennzeichnet,**
    **dass** der Hub einer Membran (35b) der Einrichtung (32) zur Erzeugung akustischer Wellen für eine Regelung auf maximale Schwingungsamplitude herangezogen wird.

13. Gargerät nach Anspruch 10 oder 11,
    **dadurch gekennzeichnet,**
    **dass** ein spannungsgesteuerter Oszillator (voltage controlled Oscillator, VCO) vorgesehen ist, der einen Spannungsabfall an einem Widerstand im Speisestromkreis der Einrichtung für die Erzeugung der akustischen Wellen (32) zur Regelung der Frequenz verwendet.

14. Gargerät nach einem der vorstehenden Ansprüche,
    **dadurch gekennzeichnet,**
    **dass** die Abmessungen des Rohres (31) und die von der Einrichtung (32) zur Erzeugung akustischer Wellen erzeugten Wellen so aufeinander abgestimmt sind, dass eine stehende Welle in einem Obermodus, insbesondere im dritten oder vierten Obermodus entsteht.

15. Gargerät nach einem der vorstehenden Ansprüche,
    **dadurch gekennzeichnet,**
    **dass** die Temperaturmesseinrichtung (23) ein Rohr (51) aufweist, das wie das erste Rohr (31) aufgebaut ist,
    **dass** es an beiden Enden (53, 54) geschlossen ist und keine Bohrungen (36) aufweist, und
    **dass** es zum Druckausgleich ein Kapillarröhrchen (57) besitzt, das zu einem Ausgleichsbehälter (58) führt.

16. Gargerät nach einem der vorstehenden Ansprüche,
    **dadurch gekennzeichnet,**
    **dass** die Temperatunnesseinrichtung (23) ein vollkommen gasdichtes Gehäuse aufweist, das die Einrichtung (52) zur Erzeugung akustischer Wellen einschließt.

17. Gargerät nach Anspruch 15 oder 16,
    **dadurch gekennzeichnet,**
    **dass** der Messwert der Feuchte aus der Differenzfrequenz der akustischen Wellen in den Rohren (31, 51) ermittelt wird.

18. Verfahren zur Bestimmung der Feuchte in der Garatmosphäre in einem Garraum (11) eines Gargerätes,
    bei dem die Temperatur der Garatmosphäre bestimmt wird,
    bei dem akustische Wellen in einem Rohr (31) erzeugt werden, und
    bei dem die Schallgeschwindigkeit in dem Garraum (11) zur Bestimmung der Feuchte herangezogen wird,
    **dadurch gekennzeichnet,**
    **dass** in dem Rohr (31) durch Resonanzanregung akustische stehende Wellen erzeugt werden,
    **dass** die Frequenz der erzeugten akustischen Wellen so eingestellt wird,
    **dass** die Maxima der stehenden Wellen aufrecht erhalten bleiben und dass die dabei eingestellte Frequenz und die Temperatur ausgewertet und daraus die Feuchte ermittelt wird.

19. Verfahren nach Anspruch 18,
    **dadurch gekennzeichnet,**
    **dass** die Frequenz der erzeugten akustischen Wellen durch Rückkopplung eingestellt wird.

**20.** Verfahren nach Anspruch 18,
**dadurch gekennzeichnet,**
**dass** die Frequenz der erzeugten akustischen Wellen durch Nachführung eingestellt wird.

**Claims**

**1.** Cooking appliance

- with a cooking chamber (11) with a cooking atmosphere,
- with a temperature measuring device (23) for determining the temperature of the cooking atmosphere,
- with a device (32) for generating acoustic waves,
- with a tube (31), in which the device (32) for generating acoustic waves is disposed, and
- with an evaluation unit (40),
wherein the tube (31) and the device (32) for generating acoustic waves are part of a device (30) for determining the moisture of the cooking atmosphere in the cooking chamber (11), and wherein the speed of sound in the cooking chamber (11) is used in the evaluation unit (40) to determine the moisture,

**characterised in**
**that** acoustic standing waves are generated in the tube (31) through resonance excitation,
**that** an apparatus (35) is provided which sets the frequency of the waves which are generated by the device (32) for generating acoustic waves such that acoustic standing waves are produced, and
**that** the frequency which is set by the apparatus (35) and the data of the temperature measuring device (23) are fed to the evaluation unit (40) and the moisture is established therefrom.

**2.** Cooking appliance according to Claim 1,
**characterised in**
**that** the apparatus (35) is a feedback apparatus which sets the frequency of the waves which are generated by the device (32) for generating acoustic waves through feedback.

**3.** Cooking appliance according to Claim 2,
**characterised in**
**that** the apparatus (35) comprises an alternating pressure transducer which is disposed in the tube (31) at the position of an antinode of the standing waves, and
**that** the alternating pressure transducer delivers feedback to the device (32) for generating the acoustic waves.

**4.** Cooking appliance according to Claim 2 or 3,
**characterised in**
**that** the apparatus (35) comprises a high-pass filter or a band-pass filter or a tracking filter which, of the fed-back frequencies, only passes desired frequency ranges, in particular outside of and above the human range of audibility.

**5.** Cooking appliance according to any one of the preceding Claims,
**characterised in**
**that** at least one bore (36) is disposed in the tube wall at the position of a node of the standing waves in the tube (31).

**6.** Cooking appliance according to Claim 5,
**characterised in**
**that** at least one respective bore (36) is disposed in the tube wall at least at the position of two nodes of the standing waves in the tube (31).

**7.** Cooking appliance according to Claim 5 or 6,
**characterised in**
**that** the bores (36) are formed as slots.

**8.** Cooking appliance according to Claim 7,
**characterised in**
**that** the bore (36) is formed as a slot which divides the tube (31) into a plurality of tube elements.

**9.** Cooking appliance according to Claim 5 or 6,
**characterised in**
**that** the bores have a circular cross section.

**10.** Cooking appliance according to any one of the preceding Claims,
**characterised in**
**that** the apparatus (35) is a tracking apparatus which sets the frequency of the waves which are generated by the device (32) for generating acoustic waves in accordance with variable measured values.

**11.** Cooking appliance according to Claim 10,
**characterised in**
**that** the apparatus (35) comprises a filter which, of the tracked frequencies, only passes desired frequency ranges, in particular outside of and above the human range of audibility.

**12.** Cooking appliance according to Claim 10 or 11,
**characterised in**
**that** the excursion of a diaphragm (35b) of the device (32) for generating acoustic waves is used for regulation to maximum vibration amplitude.

**13.** Cooking appliance according to Claim 10 or 11,
**characterised in**
**that** a voltage-controlled oscillator (VCO) is provided which uses a voltage drop at a resistor in the supply circuit of the device (32) for generating the acoustic waves to regulate the frequency.

**14.** Cooking appliance according to any one of the preceding Claims,
**characterised in**
**that** the dimensions of the tube (31) and the waves which are generated by the device (32) for generating acoustic waves are adapted to one another so as to produce a standing wave in a higher mode, in particular in the third or fourth higher mode.

**15.** Cooking appliance according to any one of the preceding Claims,
**characterised in**
**that** the temperature measuring device (23) comprises a tube (51) which is constructed like the first tube (31),
**that** it is closed at both ends (53, 54) and comprises no bores (36), and
**that** it has a capillary tube (57), which leads to an equalising vessel (58), for pressure equalisation.

**16.** Cooking appliance according to any one of the preceding Claims,
**characterised in**
**that** the temperature measuring device (23) comprises a completely gas-tight housing which encloses the device (52) for generating acoustic waves.

**17.** Cooking appliance according to Claim 15 or 16,
**characterised in**
**that** the measured moisture value is established from the difference frequency of the acoustic waves in the tubes (31, 51).

**18.** Method for determining the moisture in the cooking atmosphere in a cooking chamber (11) of a cooking appliance, in which the temperature of the cooking atmosphere is determined,
in which acoustic waves are generated in a tube (31), and
in which the speed of sound in the cooking chamber (11) is used to determine the moisture,
**characterised in**
**that** acoustic standing waves are generated in the tube (31) through resonance excitation,
**that** the frequency of the generated acoustic waves is set such that the maxima of the standing waves are maintained and that the frequency which is set in this case and the temperature are evaluated and the moisture is established therefrom.

**19.** Method according to Claim 18,
**characterised in**

**that** the frequency of the generated acoustic waves is set through feedback.

20. Method according to Claim 18,
   **characterised in**
   **that** the frequency of the generated acoustic waves is set through tracking.

## Revendications

1. Appareil de cuisson

   - avec un espace de cuisson (11) avec une atmosphère de cuisson,
   - avec un dispositif de mesure de la température (23) pour la détermination de la température de l'atmosphère de cuisson,
   - avec un dispositif (32) pour la production d'ondes acoustiques,
   - avec un tube (31) dans lequel est disposé le dispositif (32) pour la production d'ondes acoustiques, et
   - avec une unité d'évaluation (40)
   - le tube (31) et le dispositif (32) pour la production d'ondes acoustiques faisant partie d'un dispositif (30) pour la détermination de l'humidité de l'atmosphère de cuisson dans l'espace de cuisson (11) et la vitesse du son dans l'espace de cuisson (11) étant utilisée dans l'unité d'évaluation (40) pour la détermination de l'humidité,

   **caractérisé en ce que**
   des ondes acoustiques stationnaires sont produites dans le tube (31) par excitation en résonance,
   **en ce qu'**il est prévu un dispositif (35) qui règle la fréquence des ondes acoustiques produites par le dispositif (32) pour la production d'ondes acoustiques de telle sorte qu'il apparaisse des ondes acoustiques stationnaires et
   **en ce que** la fréquence réglée par le dispositif (35) et les données du dispositif de mesure de la température (23) sont acheminées à l'unité d'évaluation (40) et que l'humidité en est déterminée.

2. Appareil de cuisson selon la revendication 1,
   **caractérisé en ce que**
   le dispositif (35) est un dispositif à réinjection, qui procède par réinjection au réglage de la fréquence des ondes produites par le dispositif (32) pour la production d'ondes acoustiques.

3. Appareil de cuisson selon la revendication 2,
   **caractérisé en ce que**
   le dispositif (35) comporte un récepteur de pression alternée qui est disposé dans le tube (31) à la position d'un ventre d'oscillations des ondes stationnaires et
   **en ce que** le récepteur de pression alternée délivre une réinjection sur le dispositif pour la production de l'onde acoustique (32).

4. Appareil de cuisson selon la revendication 2 ou 3,
   **caractérisé en ce que**
   le dispositif (35) comporte un filtre passe-haut ou un filtre passe-bande ou un filtre variable, qui n'autorise des fréquences réinjectées que les intervalles de fréquence désirés, en particulier en dehors et au-dessus de la plage d'audition humaine.

5. Appareil de cuisson selon l'une quelconque des revendications précédentes,
   **caractérisé en ce qu'**
   en la position d'un noeud d'oscillation des ondes stationnaires dans le tube (31), au moins un trou (36) est disposé dans la paroi du tube.

6. Appareil de cuisson selon la revendication 5,
   **caractérisé en ce qu'**
   au moins en la position de deux noeuds d'oscillation des ondes stationnaires dans le tube (31), au moins un trou (36) respectivement est disposé dans la paroi du tube.

7. Appareil de cuisson selon la revendication 5 ou 6,
   **caractérisé en ce que**

les trous (36) sont configurés comme fentes.

8. Appareil de cuisson selon la revendication 7,
   **caractérisé en ce que**
   le trou (36) est configuré comme fente séparant le tube (31) en plusieurs éléments de tube.

9. Appareil de cuisson selon la revendication 5 ou 6,
   **caractérisé en ce que**
   les trous possèdent une section circulaire.

10. Appareil de cuisson selon l'une quelconque des revendications précédentes,
    **caractérisé en ce que**
    le dispositif (35) est un dispositif de poursuite qui procède au réglage de la fréquence des ondes produites par le dispositif (32) pour la production d'ondes acoustiques en fonction de valeurs de mesure variables.

11. Appareil de cuisson selon la revendication 10,
    **caractérisé en ce que**
    le dispositif (35) comporte un filtre qui, parmi les fréquences poursuivies, autorise seulement des plages de fréquence désirées, en particulier en dehors et au-dessus de la plage d'audition humaine.

12. Appareil de cuisson selon la revendication 10 ou 11,
    **caractérisé en ce que**
    la course de la membrane (35b) du dispositif (32) pour la production d'ondes acoustiques est utilisée pour une régulation à l'amplitude d'oscillations maximale.

13. Appareil de cuisson selon la revendication 10 ou 11,
    **caractérisé en ce qu'**
    il est prévu un oscillateur commandé par tension (voltage controlled oscillator, VCO), qui utilise pour la régulation de la fréquence une chute de tension sur une résistance dans le circuit de courant d'alimentation du dispositif pour la production d'ondes acoustiques (32).

14. Appareil de cuisson selon l'une quelconque des revendications précédentes,
    **caractérisé en ce que**
    les dimensions du tube (31) et les ondes produites par le dispositif (32) pour la production d'ondes acoustiques sont adaptées les unes aux autres de telle sorte qu'il apparaisse une onde stationnaire dans un mode harmonique, en particulier dans le troisième ou le quatrième mode harmonique.

15. Appareil de cuisson selon l'une quelconque des revendications précédentes,
    **caractérisé en ce que**
    le dispositif de mesure de la température (23) comporte un tube (51) qui est construit comme le premier tube (31), qui est fermé aux deux extrémités (53, 54) et qui ne comporte pas de trous (36), et qui possède un tube capillaire (57) qui conduit à un vase d'expansion (58) pour l'égalisation des pressions.

16. Appareil de cuisson selon l'une quelconque des revendications précédentes,
    **caractérisé en ce que**
    le dispositif de mesure de la température (23) comporte un boîtier complètement étanche aux gaz qui enveloppe le dispositif pour la production d'ondes acoustiques (52).

17. Appareil de cuisson selon la revendication 15 ou 16,
    **caractérisé en ce que**
    la valeur de mesure de l'humidité est déterminée à partir de la différence de fréquence des ondes acoustiques dans les tubes (31, 51).

18. Procédé pour la détermination de l'humidité dans l'atmosphère de cuisson dans un espace de cuisson (11) d'un appareil de cuisson,
    dans lequel la température de l'atmosphère de cuisson est déterminée
    dans lequel des ondes acoustiques sont produites dans le tube (31) et
    dans lequel la vitesse du son dans l'espace de cuisson (11) est utilisée à la détermination de l'humidité,

**caractérisé en ce que**
des ondes stationnaires sont produites par excitation en résonance dans le tube (31),
**en ce que** la fréquence des ondes acoustiques produites est réglée de telle sorte que les maxima des ondes stationnaires soient conservés et **en ce que** la fréquence réglée ce faisant et la température sont évaluées et que l'humidité en est déterminée.

19. Procédé selon la revendication 18,
**caractérisé en ce que**
la fréquence des ondes acoustiques produites est réglée par réinjection.

20. Procédé selon la revendication 18,
**caractérisé en ce que**
la fréquence des ondes acoustiques produites est réglée par poursuite.

**FIG. 1**

**FIG. 2**

**FIG. 3**

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0386862 B1
- DE 20013489 U1
- EP 0517433 B1
- DE 4141768 A1
- EP 0701388 B1
- DE 4206845 C2
- US 5689060 A
- CH 398123
- DE 906023 C
- DE 19809662 A1